# FASCICULE DE BREVET EUROPEEN

(11) **EP 2 681 743 B1**
(45) Date de publication et mention de la délivrance du brevet: **12.11.2014**
(21) Numéro de dépôt: 12707502.6
(22) Date de dépôt: 24.02.2012
(51) Int. Cl.: G21F 9/10, G21C 19/46, G21F 9/04, B01J 14/00

(54) **PROCEDE DE PRECIPITATION D'UN OU PLUSIEURS SOLUTES**
VERFAHREN ZUR AUSFÄLLUNG EINES ODER MEHRERER GELÖSTER STOFFE
POCESS FOR PRECIPITATION OF ONE OR MORE DISSOLVED COMPOUNDS

(30) Priorité: 28.02.2011 FR 1151610
(43) Date de publication de la demande: 08.01.2014
(73) Titulaire: Commissariat à l'Énergie Atomique et aux Énergies Alternatives, 75015 Paris (FR)
(72) Inventeur: PICARD, Romain, F-30200 Bagnols Sur Ceze (FR); DUHAMET, Jean, F-30200 Bagnols Sur Ceze (FR); ODE, Denis, F-30200 Bagnols Sur Ceze (FR)
(74) Mandataire: Ilgart, Jean-Christophe
(86) Numéro de dépôt international: PCT/EP2012/053134
(87) Numéro de publication internationale: WO 2012/116930

(56) Documents cités:
- WO-A2-2008/105928
- FR-A1- 2 905 283
- US-A- 3 395 988
- US-A- 4 548 790
- US-A1- 2009 294 299
- US-A1- 2010 301 287

## Description

### DOMAINE TECHNIQUE

L'invention a trait à un procédé de précipitation d'un ou plusieurs solutés contenu(s) dans une phase liquide.

Elle trouve application dans le traitement et le recyclage des combustibles nucléaires usés, où elle présente un intérêt tout particulièrement pour la préparation oxalique des actinides pouvant se situer en aval d'un procédé de traitement des combustibles nucléaires, notamment en vue de récupérer l'uranium et le plutonium actuellement présents dans les combustibles usés.

Plus précisément, le procédé de traitement des combustibles nucléaires usés peut comprendre, après les étapes classiques de dégainage et de dissolution dans de l'acide nitrique concentré, plusieurs cycles de purification, et notamment trois cycles, à savoir :
- un premier cycle qui vise à décontaminer conjointement l'uranium et le plutonium vis-à-vis de deux actinides(III), l'américium et le curium, ainsi que de la majeure partie des produits de fission, et à réaliser une partition de l'uranium et du plutonium en deux flux ; et
- deux cycles complémentaires, dénommés respectivement « *deuxième cycle uranium »* et « *deuxième cycle plutonium »* et qui visent à purifier séparément l'uranium et le plutonium après leur partition.

Le plutonium ainsi isolé est ensuite soumis à une étape de précipitation oxalique, pour donner un précipité d'oxalate de plutonium Pu(C₂O₄)₂, lequel précipité peut être ensuite transformé en oxyde de plutonium.

Une des difficultés des procédés de précipitation, et en particulier du procédé de précipitation oxalique, réside dans la nature collante du précipité, dont une partie peut adhérer aux parois du réacteur, dans lequel la réaction de précipitation est mise en oeuvre.

Les procédés de précipitation mis en oeuvre dans l'art antérieur peuvent être réalisés dans de nombreux types de réacteurs.

Des réacteurs de conception simple peuvent être des réacteurs du type cristallisoir et des réacteurs du type vortex.

Les réacteurs du type cristallisoir reposent sur le principe d'une augmentation progressive de la sursaturation de la solution de précipitation engendrant une cristallisation du soluté à précipiter, ce type de réacteur fonctionnant classiquement selon un mode discontinu, ce qui limite leur utilisation dans l'optique de réaliser une précipitation à l'échelle industrielle. Pour pallier cet inconvénient, une solution consiste à multiplier les réacteurs et à les faire fonctionner en parallèle et en décalé.

Les réacteurs du type Vortex, tels que définis, par exemple, dans US 395,988 et US 4,464,341, sont constitués classiquement d'un récipient en verre, dont le contenu est agité par la rotation d'un barreau intérieur, qui crée un vortex à la double fonction de confiner, au sein d'une phase aqueuse, le précipité éloigné des parois en verre et de garantir un temps de séjour suffisant pour autoriser la croissance des grains du précipité, afin de le rendre moins collant. Toutefois, ces réacteurs sont sujets à des encrassements périodiques et il est difficile de prévoir pour ceux-ci la garantie d'un régime sous-critique lorsqu'on veut augmenter les dimensions de ces réacteurs.

Des réacteurs de conception plus complexe ont également été envisagés, parmi lesquels on peut citer les réacteurs dits « à colonne pulsée », tels que décrits dans FR 2905283, mettant en oeuvre un système à contre-courant pulsé et un confinement du précipité par une phase organique dans une colonne à garnissage interne, avec toutefois les limitations suivantes :
*l'utilisation d'un garnissage interne pour la colonne nécessaire à l'établissement du cisaillement et à la rencontre des réactifs augmente de manière importante la surface exposée au précipité, ce qui peut engendrer, malgré tout, l'adhésion du précipité à la surface exposée, sauf à revêtir systématiquement la surface du garnissage par des matériaux très hydrophobes ;
*l'utilisation d'un système à contre-courant pulsé crée des zones mortes dans la colonne, où les gouttes peuvent venir adhérer au garnissage de la colonne, générant ainsi un dépôt de précipité.

Il subsiste donc un besoin pour un procédé de précipitation d'un ou plusieurs solutés ne présentant pas les inconvénients suivants :
- l'adhérence du précipité formé aux parois du réacteur, générant à terme un encrassage de celui-ci ;
- l'obligation de revêtir les parois du réacteur d'un revêtement hydrophobe pour limiter l'adhérence du précipité sur celles-ci ;
- l'apparition de zones mortes dans le réacteur de précipitation à l'origine de l'encrassage du réacteur dans ces zones.

### EXPOSÉ DE L'INVENTION

Ainsi, l'invention a trait à un procédé de précipitation d'au moins un soluté dans un réacteur comprenant :
a) une étape de mise en contact en co-courant dans un réacteur d'une première phase liquide comprenant le soluté, d'une deuxième phase liquide comprenant un réactif de précipitation du soluté, moyennant quoi l'on obtient un mélange comprenant, en suspension, des particules de précipité, et d'une troisième phase liquide constituant une phase dispersante pour ledit mélange ; et
b) une étape de fluidisation par la troisième phase du mélange mentionné à l'étape a).

De par la nature de ses étapes, le procédé de l'invention présente les avantages suivants :
- l'absence d'adhérence du précipité aux parois du réacteur grâce au confinement du mélange comprenant les particules de précipité par une troisième phase liquide et la fluidisation du mélange par cette même troisième phase liquide qui empêche toute stagnation de ces particules au niveau des parois et permet un rebond des gouttes renfermant lesdites particules à la surface des parois ;
- la possibilité de régler au mieux le temps de séjour du mélange dans le réacteur, grâce à la souplesse du régime de fluidisation (en jouant notamment sur le débit de la troisième phase liquide, pour obtenir une précipitation optimale du soluté), ce temps de séjour pouvant être choisi de sorte à obtenir des grains de précipité de taille importante, moyennant quoi ils n'adhéreront pas aux parois du réacteur ;
- une grande souplesse de mise en oeuvre avec la possibilité d'adapter le procédé en fonction du ou des solutés que l'on souhaite précipiter par le choix approprié d'une deuxième phase liquide et d'une troisième phase liquide, dès lors qu'elles souscrivent aux critères de l'invention.

Comme mentionné ci-dessus, le procédé de l'invention comprend une première étape a) consistant à mettre en contact en co-courant dans un réacteur une première phase liquide comprenant le soluté, une deuxième phase liquide comprenant un réactif de précipitation du soluté, moyennant quoi l'on obtient un mélange comprenant, en suspension, des particules de précipité, et une troisième phase liquide constituant une phase dispersante pour ledit mélange.

Avantageusement, la première phase liquide et la deuxième phase liquide sont miscibles entre elles, tandis que la troisième phase liquide est immiscible avec le mélange comprenant la première phase liquide et la deuxième phase liquide.

On précise que par co-courant, on entend que la première phase liquide, la deuxième phase liquide et la troisième phase liquide circulent dans le même sens, ce qui implique qu'elles soient injectées dans le réacteur selon un mode qui permette cette circulation à co-courant.

Ainsi, d'un point de vue pratique, dans le cas notamment où la densité du mélange de la première phase liquide et de la deuxième phase liquide est supérieure à celle de la troisième phase liquide, la première phase liquide, la deuxième phase liquide et la troisième phase liquide peuvent être injectées dans un réacteur, par exemple, au niveau d'une partie inférieure de celui-ci, cette partie inférieure constituant une zone d'injection. Par exemple, l'entrée de la première phase liquide et l'entrée de la deuxième phase liquide peuvent être disposées à la même hauteur de la zone d'injection et situées en vis-à-vis, moyennant quoi, lors de l'injection simultanée de ces deux phases, la mise en contact de ces deux phases est instantanée formant ainsi spontanément un mélange comprenant, en suspension, les particules de précipité. Quant à la troisième phase liquide, selon cette configuration, l'entrée de cette dernière peut être située, dans la zone d'injection à une hauteur inférieure de celle des entrées de la première phase liquide et la deuxième phase liquide.

Dans le cas où la densité du mélange de la première phase liquide et de la deuxième phase liquide est inférieure à la densité de la troisième phase liquide, la première phase liquide, la deuxième phase liquide et la troisième phase liquide peuvent être injectées dans un réacteur, par exemple, au niveau d'une partie supérieure de celui-ci, cette partie supérieure constituant une zone d'injection. Par exemple, l'entrée de la première phase liquide et l'entrée de la deuxième phase liquide peuvent être disposées à la même hauteur de la zone d'injection et situées en vis-à-vis, moyennant quoi, lors de l'injection simultanée de ces deux phases, la mise en contact de ces deux phases est instantanée formant ainsi spontanément un mélange comprenant, en suspension, les particules de précipité. Quant à la troisième phase liquide, selon cette configuration, l'entrée de cette dernière peut être située, dans la zone d'injection, au-dessus des entrées de la première phase liquide et la deuxième phase liquide.

L'injection de la première phase liquide, de la deuxième phase liquide et de la troisième phase liquide peut être effectuée en mode continu ou encore en mode semi-continu, ce qui signifie, pour ce dernier cas, que l'une au moins des phases liquides susmentionnées est injectée en mode continu et une au moins des phases liquides susmentionnées est injectée en mode discontinu (par exemple, par injection périodique du type créneau, type rampe ou type Dirac).

On précise que, par phase dispersante, on entend que la troisième phase liquide est apte à faire en sorte que le mélange formé par la mise en contact de la première phase liquide et de la deuxième phase liquide au sein duquel du précipité est formé soit dispersé sous forme de gouttes au sein de la troisième phase liquide, cette troisième phase liquide étant généralement choisie de sorte à être immiscible avec le mélange résultant de la première phase liquide et la deuxième phase liquide.

L'étape de mise en contact a) est effectuée classiquement par injection d'une première phase liquide, d'une deuxième phase liquide et d'une troisième phase liquide dans une zone du réacteur spécifique, par exemple, une partie inférieure dudit réacteur (dite zone d'injection) ou une partie supérieure dudit réacteur, sachant que le débit d'alimentation pour la troisième phase liquide doit être, de préférence, supérieur à celui de la première phase liquide et/ou de la deuxième phase liquide, pour que la troisième phase liquide puisse assurer la fluidisation du mélange résultant de la première phase liquide et de la deuxième phase liquide.

Qui plus est, le choix d'un tel débit d'alimentation pour la troisième phase liquide va permettre, en outre, aux grains de précipité formés par réaction entre la première phase et la deuxième phase liquide de ne pas adhérer aux parois du réacteur.

Lors de la mise en oeuvre de l'étape a), comme déjà mentionné ci-dessus, la première phase liquide et la deuxième phase liquide vont réagir entre elles pour former un mélange comprenant un précipité du soluté, lequel mélange va être entraîné par la troisième phase liquide en régime de lit fluidisé (correspondant à l'étape b) susmentionnée et dénommé également fluidisation).

On précise que, par fluidisation, on entend le fait de mettre en suspension des gouttes chargées de particules de précipité formées dans un écoulement fluide ascendant, lesdites gouttes chargées de particules constituant le lit fluidisé et l'écoulement fluide ascendant étant constitué par la troisième phase liquide.

De l'utilisation d'un régime de lit fluidisé découle notamment une augmentation de taille de ces particules, ce qui permet d'éviter une adhérence de ces particules aux parois, en plus du fait que cette adhérence est également empêchée grâce au confinement généré par la troisième phase liquide.

Outre les étapes a) et b), le procédé peut comprendre une étape de sédimentation du mélange issu de l'étape b), cette étape de sédimentation pouvant être réalisée par simple décantation, cette étape de sédimentation pouvant être suivie d'une étape de recueil dudit précipité.

L'étape de recueil peut être typiquement réalisée en soutirant les particules de précipité ayant sédimenté. Ce recueil peut être suivi d'opérations de séparation solide-liquide du type filtrations, centrifugations ou autres, de sorte à débarrasser les particules de précipité de la phase liquide susceptible d'avoir été soutirée avec elles, ainsi que d'opérations de lavage et/ou de séchage.

Le procédé de l'invention peut comprendre, en outre, une étape de recyclage de la troisième phase liquide, qui peut être réinjectée au niveau de la zone d'injection mentionnée ci-dessus.

Le procédé de l'invention est, avantageusement, mis en oeuvre, notamment dans le cas où la densité du mélange de la première phase liquide et de la deuxième phase liquide est supérieure à celle de la troisième phase liquide, dans un réacteur à lit fluidisé d'axe principal vertical comprenant :
- une partie inférieure (dite, également, partie basse) dévolue à l'injection de la première phase liquide, la deuxième phase liquide et de la troisième phase liquide ;
- une partie intermédiaire (dite, également, partie centrale) dévolue à la fluidisation du mélange résultant de la première phase liquide et de la deuxième phase liquide par la troisième phase liquide ; et
- une partie supérieure (dite, également, partie haute) dévolue à la sédimentation du précipité formé.

A l'inverse, dans le cas où la densité du mélange de la première phase liquide et de la deuxième phase liquide est inférieure à celle de la troisième phase liquide, le procédé peut être, avantageusement, mis en oeuvre dans un réacteur à lit fluidisé d'axe principal vertical comprenant :
- une partie supérieure (dite, également, partie haute) dévolue à l'injection de la première phase liquide, la deuxième phase liquide et de la troisième phase liquide ;
- une partie intermédiaire (dite, également, partie centrale) dévolue à la fluidisation du mélange résultant de la première phase liquide et de la deuxième phase liquide par la troisième phase liquide ; et
- une partie inférieure (dite, également, partie basse) dévolue à la sédimentation du précipité formé.

Lorsque le procédé de l'invention est dédié à la précipitation oxalique des actinides, notamment dans le cadre du traitement de combustibles usés, le précipité formé dans le cadre de ce procédé est un précipité d'oxalate d'actinide(s).

Dans ce cas de figure :
- la première phase liquide est, classiquement, une solution aqueuse comprenant, comme soluté, au moins un élément actinide (cette solution étant dénommée ci-après « solution d'actinide(s) » ;
- la deuxième phase liquide est, classiquement, une solution aqueuse comprenant un réactif de précipitation du ou des éléments actinides présents dans la première phase liquide, ce réactif de précipitation étant l'acide oxalique (cette solution étant dénommée ci-après « solution oxalique ») ; et
- la troisième phase liquide est, classiquement, une solution organique comprenant un solvant organique immiscible avec la première phase liquide et la deuxième phase liquide, ce solvant organique pouvant être du dodécane ou du tétrapropylène hydrogéné (connu sous l'abréviation TPH).

La solution d'actinide(s) contient, classiquement, le ou les actinides sous la forme de nitrate(s), vu que c'est sous cette forme que ces éléments sont généralement produits par les usines de traitement des combustibles nucléaires usés.

En particulier, lorsque le procédé de l'invention s'inscrit dans le traitement des combustibles usés, les actinides concernés peuvent être l'uranium, le plutonium, le neptunium, le thorium, l'américium et/ou le curium.

En particulier, il peut s'agir d'uranium, de plutonium, de neptunium, d'américium et/ou de curium, lorsque les précipités d'oxalates formés sont destinés à être transformés en un composé d'actinide(s) utile pour la fabrication de pastilles de combustibles nucléaires, du type oxyde, carbure ou nitrure.

L'invention va être, à présent, décrit au regard du mode de réalisation particulier qui suit, ce mode de réalisation étant donné à titre illustratif et non limitatif.

### BRÈVE DESCRIPTION DES DESSINS

La figure 1 est un schéma illustrant un réacteur approprié pour la préparation d'un précipité d'oxalate de cérium conformément au procédé de l'invention.
La figure 2 est un schéma illustrant en détail de la partie inférieure du réacteur (constituant la zone d'injection) illustré sur la figure 1.
Les figures 3 à 5 correspondent à des clichés pris au niveau de la partie intermédiaire du réacteur (première partie verticale) pour différents modes de fonctionnements exposés dans l'exemple ci-dessous.

### EXPOSÉ DÉTAILLÉ DE MODES DE RÉALISATION PARTICULIERS

### EXEMPLE Précipitation d'oxalate de cérium

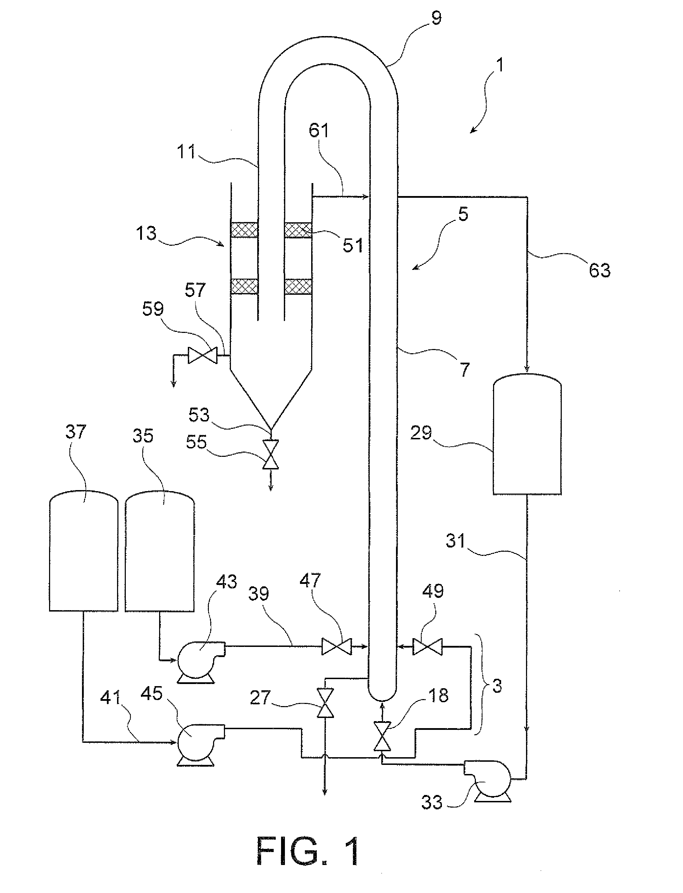

Pour réaliser des essais relatifs à la précipitation d'oxalate de cérium, on utilise le réacteur 1, qui est représenté schématiquement sur la figure 1.

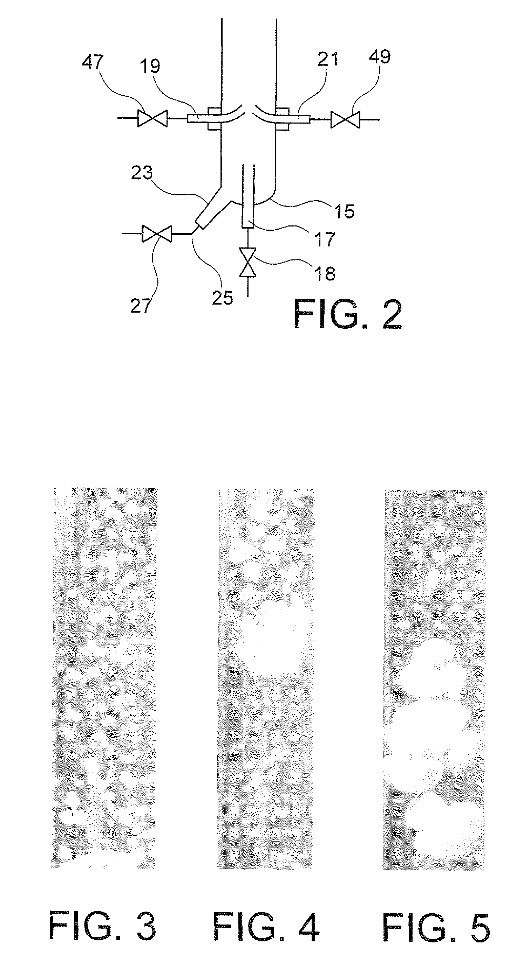

Ce réacteur en verre d'axe principal vertical se compose de trois parties :
- une partie inférieure 3 constituant la zone d'injection de la première phase liquide consistant en une solution aqueuse comprenant du cérium sous forme de nitrate de cérium, de la deuxième phase liquide consistant en une solution oxalique et de la troisième phase liquide consistant en une solution organique de tétrapropylène hydrogéné, cette partie inférieure étant représentée en vue de détail sur la figure 2 ;
- une partie intermédiaire 5 dévolue à la fluidisation du mélange en émulsion résultant de la première phase liquide et de la deuxième phase liquide par la troisième phase liquide, cette partie intermédiaire consistant en un tube cylindrique comprenant une première partie verticale 7 à section droite constante (de 15 mm de diamètre) qui présente une courbure 9 et une deuxième partie verticale 11 ;
- une partie supérieure 13 dévolue à la récupération par sédimentation du précipité formé, consistant en un décanteur, dans lequel plonge l'extrémité ouverte de la deuxième partie verticale 11 du tube constitutif de la partie intermédiaire du réacteur.

Plus précisément, la partie inférieure, représentée en vue de détail sur la figure 2, est constituée d'un tube cylindrique de section circulaire constante (de 15 mm de diamètre) fermé au niveau de son extrémité inférieure 15.

Les réactifs, c'est-à-dire la solution organique de tétrapropylène hydrogéné (constituant la troisième phase liquide), la solution comprenant du cérium (constituant la première phase liquide) et la solution oxalique (constituant la deuxième phase liquide), sont introduits dans cette partie inférieure *via* :
- une buse verticale 17 traversant l'extrémité inférieure du tube et alimentant la partie inférieure du réacteur en solution organique via une vanne 18 ;
- deux buses 19 et 21 situées à mi-hauteur de la zone d'injection et diamétralement opposées l'une à l'autre, ces buses 19 et 21 étant constituées d'un tube en verre horizontal en partant de son entrée et finissant sous forme coudée au niveau de la sortie (correspondant à la partie de la buse qui pénètre dans la partie inférieure du réacteur), ces buses alimentant la partie inférieure du réacteur respectivement en solution oxalique et en solution comprenant du cérium.

La partie inférieure 3 du réacteur est également munie, au niveau de son extrémité inférieure, d'une canule 23 permettant de purger le réacteur, cette canule étant reliée à une conduite 25 munie d'une vanne 27.

La buse verticale 17 est reliée à un réservoir d'alimentation 29 en solution organique via une conduite 31 munie d'une pompe 33 permettant de régler le débit d'alimentation de la solution organique.

Les buses 19 et 21 sont, quant à elles, respectivement reliées à un réservoir d'alimentation en solution oxalique 35 et un réservoir d'alimentation en solution comprenant du cérium 37 via des conduites 39 et 41 munies également de pompes 43 et 45 et de vannes 47 et 49, qui vont permettre de régler le débit d'alimentation de la solution oxalique et de la solution comprenant du cérium.

C'est dans cette partie inférieure du réacteur que se produit la mise en contact de la solution oxalique et de la solution comprenant du cérium, ce qui entraîne la génération *in situ* d'un précipité d'oxalate de cérium au sein d'un mélange de phases aqueuses issues de la première et deuxième phases liquides, ce mélange étant ensuite entraîné en direction de la partie intermédiaire du réacteur via la solution organique, qui confine ce mélange au sein de gouttelettes dispersées dans la solution organique.

Comme il ressort des figures 1 et 2, le réacteur ne comporte pas d'agitateur, le mélange des différentes phases étant assuré uniquement par les débits d'alimentation de ce réacteur en ces différentes phases.

Comme évoqué ci-dessus, la partie intermédiaire consiste en un tube cylindrique vertical à section droite constante (de 15 mm de diamètre), qui prolonge le tube constitutif de la partie inférieure du réacteur, sur une hauteur de 1 m (constituant ainsi une première partie verticale), au-delà de laquelle ce tube présente une courbure conduisant à une deuxième partie verticale dont l'extrémité plonge dans la partie supérieure du réacteur, le tube conservant la même section sur toute sa longueur.

Enfin, la partie supérieure 13 du réacteur consiste en un décanteur présentant une grille 51 permettant de forcer la coalescence des fines (correspondant aux gouttelettes très fines) pouvant être entraînées par la solution organique pendant l'opération de décantation, une sortie 53 munie d'une vanne 55 dans sa partie inférieure rétrécie permettant l'évacuation du précipité et pouvant constituer également une ligne de purge du décanteur et une sortie 57 munie d'une vanne 59 permettant l'évacuation des eaux mères oxaliques.

Dans sa partie supérieure, le décanteur comporte également une surverse 61 permettant à la totalité de la phase organique d'être réacheminée vers le réservoir de phase organique 29 via une conduite 63.

Trois essais (respectivement A, B et C) ont été réalisés en condition de précipitation collante à partir d'une première phase liquide (une solution aqueuse nitrate (1,5 N) de nitrate de cérium présentant une concentration de 24 g/L), une deuxième phase liquide (une solution aqueuse oxalique présentant une concentration de 0,7 mol/L) et une troisième phase liquide (une solution organique de tétrapropylène hydrogéné TPH).

Le premier essai A est réalisé avec les débits de phases liquides suivants :
*0,4 L/h de nitrate de cérium (III) ;
*0,4 L/h d'acide oxalique ; et
*100 L/h de TPH.

Sur le cliché représenté sur la figure 3 pris au niveau de la partie intermédiaire du réacteur (plus précisément, la première partie verticale avant courbure), il est observé une distribution relativement monodisperse de gouttelettes (résultant du mélange de la première phase liquide et de la deuxième phase liquide), au sein desquelles il est possible de distinguer le précipité en formation.

Le deuxième essai B est réalisé en diminuant le débit de phase organique par rapport à l'essai A, les débits respectifs des phases liquides étant les suivants :
*0,4 L/h de nitrate de cérium (III) ;
*0,4 L/h d'acide oxalique ; et
*80 L/h de TPH.

Sur le cliché représenté sur la figure 4 pris au même niveau du réacteur que pour la figure 3, on observe l'apparition de macrogouttes, dans lesquelles il est possible de distinguer le précipité en train de se déposer à l'intérieur de celles-ci.

Le troisième essai C est réalisé en diminuant encore le débit de phase organique par rapport à l'essai B, les débits respectifs des phases liquides étant les suivants :
*0,4 L/h de nitrate de cérium (III) ;
*0,4 L/h d'acide oxalique ; et
*60 L/h de TPH.

Sur le cliché représenté sur la figure 5, on observe que des macrogouttes commencent à se rassembler et à s'organiser pour former des amas de gouttes chargées de précipité. Ces amas, qui se forment de manière cyclique, délimitent des zones espacées où se produit la précipitation. Ces amas ont classiquement une vitesse de déplacement par rapport à la solution organique plus faible que les macrogouttes et sont entraînés vers le haut selon un mode d'écoulement du type piston pur.

Ce dernier mode est particulièrement intéressant car il permet d'obtenir un confinement stable des amas de précipité par la solution organique et un long temps de séjour dans le réacteur.

Qui plus est, ce mode de fonctionnement permet d'absorber des débits d'alimentation en première phase liquide (celle comprenant du nitrate de cérium) relativement élevé.

Ainsi, il a été déterminé pour des débits d'alimentation en première phase liquide allant de 200 mL/h à 1000 mL/h, les points de fonctionnement suivants pour l'apparition d'amas de précipité :

| Débit d'alimentation en première phase liquide (en mL/h) | Débit d'alimentation en deuxième phase liquide (en mL/h) | Débit d'alimentation en troisième phase liquide (en L/h) |
|---|---|---|
| 200 | 200 | 50-55 |
| 400 | 400 | 55-60 |
| 800 | 800 | 70-75 |
| 1000 | 1000 | 80-85 |

## Revendications

1. Procédé de précipitation d'au moins un soluté dans un réacteur comprenant :
a) une étape de mise en contact en co-courant, dans un réacteur, d'une première phase liquide comprenant le soluté, d'une deuxième phase liquide comprenant un réactif de précipitation du soluté, moyennant quoi l'on obtient un mélange comprenant, en suspension, des particules de précipité, et d'une troisième phase liquide apte à constituer une phase dispersante pour ledit mélange ; et
b) une étape de fluidisation par la troisième phase du mélange mentionné à l'étape a).

2. Procédé selon la revendication 1, dans lequel la première phase liquide, la deuxième phase liquide sont miscibles entre elles, tandis que la troisième phase liquide est immiscible avec le mélange comprenant la première phase liquide et la deuxième phase liquide.

3. Procédé selon la revendication 1 ou 2, dans lequel la première phase liquide et la deuxième phase liquide sont injectées dans le réacteur à la même hauteur de celui-ci, tandis que la troisième phase liquide est injectée dans le réacteur à une hauteur inférieure à celle de la première phase liquide et de la deuxième phase liquide, l'injection de la première phase liquide, de la deuxième phase liquide et de la troisième phase liquide étant réalisée dans une partie inférieure du réacteur constituant une zone d'injection.

4. Procédé selon la revendication 1 ou 2, dans lequel la première phase liquide et la deuxième phase liquide sont injectées dans le réacteur à la même hauteur de celui-ci, tandis que la troisième phase liquide est injectée dans le réacteur à une hauteur supérieure à celle de la première phase liquide et de la deuxième phase liquide, l'injection de la première phase liquide, de la deuxième phase liquide et de la troisième phase liquide étant réalisée dans une partie supérieure du réacteur constituant une zone d'injection.

5. Procédé selon l'une quelconque des revendications précédentes, dans lequel la troisième phase liquide est injectée dans le réacteur à un débit d'alimentation supérieur à celui de la première phase liquide et/ou de la deuxième phase liquide.

6. Procédé selon l'une quelconque des revendications précédentes, comprenant, en outre, après l'étape b), une étape de sédimentation du mélange issu de l'étape b).

7. Procédé selon la revendication 6, comprenant, en outre, après l'étape de sédimentation, une étape de recueil du précipité formé.

8. Procédé selon l'une quelconque des revendications précédentes, comprenant, en outre, une étape de recyclage de la troisième phase liquide.

9. Procédé selon la revendication 3, qui est mis en oeuvre dans un réacteur à lit fluidisé d'axe principal vertical comprenant :
- une partie inférieure dévolue à l'injection de la première phase liquide, la deuxième phase liquide et de la troisième phase liquide ;
- une partie intermédiaire dévolue à la fluidisation du mélange résultant de la première phase liquide et de la deuxième phase liquide par la troisième phase liquide ; et
- une partie supérieure dévolue à la sédimentation du précipité formé.

10. Procédé selon la revendication 4, qui est mis en oeuvre dans un réacteur à lit fluidisé d'axe principal vertical comprenant :
- une partie supérieure dévolue à l'injection de la première phase liquide, la deuxième phase liquide et de la troisième phase liquide ;
- une partie intermédiaire dévolue à la fluidisation du mélange résultant de la première phase liquide et de la deuxième phase liquide par la troisième phase liquide ; et
- une partie inférieure dévolue à la sédimentation du précipité formé.

11. Procédé selon l'une quelconque des revendications précédentes, dans lequel le soluté est un élément actinide.

12. Procédé selon la revendication 11, qui est un procédé de précipitation oxalique d'au moins un élément actinide.

13. Procédé selon la revendication 11 ou 12, dans lequel :
- la première phase liquide est une solution aqueuse comprenant, comme soluté, au moins un élément actinide ;
- la deuxième phase liquide est une solution aqueuse comprenant un réactif de précipitation du ou des éléments actinides présents dans la première phase liquide, ce réactif de précipitation étant l'acide oxalique; et
- la troisième phase liquide est une solution organique comprenant un solvant organique immiscible avec la première phase liquide et la deuxième phase liquide.

14. Procédé selon la revendication 13, dans lequel le solvant organique est du dodécane ou du tétrapropylène hydrogéné.

## Patentansprüche

1. Verfahren zur Ausfällung wenigstens eines gelösten Stoffes in einem Reaktor, umfassend :
a) einen Schritt zur Herstellung eines Gleichströmungs-Kontakts in einem Reaktor zwischen einer den gelösten Stoff enthaltenden ersten flüssigen Phase, einer ein Ausfällreagenz des gelösten Stoffes enthaltenden zweiten flüssigen Phase - wodurch man als Suspension eine Ausfällpartikel des gelösten Stoffes enthaltende Mischung erhält -, und einer dritten flüssigen Phase, fähig eine Dispersionsphase für die genannte Mischung zu bilden; und
b) einen Schritt zur Fluidisierung der in Schritt a) genannten Mischung durch die dritte Phase.

2. Verfahren nach Anspruch 1, bei dem die erste flüssige Phase und die zweite flüssige Phase miteinander vermischbar sind, während die dritte flüssige Phase nicht mit der Mischung vermischbar ist, welche die erste flüssige Phase und die zweite flüssige Phase umfasst.

3. Verfahren nach Anspruch 1 oder 2, bei dem die erste flüssige Phase und die zweite flüssige Phase auf gleicher Höhe des Generators in diesen eingespritzt werden, während die dritte flüssige Phase in einer Höhe in den Reaktor eingespritzt wird, die geringer als diejenige der ersten flüssigen Phase und der zweiten flüssigen Phase ist, wobei die Einspritzung der ersten flüssigen Phase, der zweiten flüssigen Phase und der dritten flüssigen Phase in einem eine Einspritzzone des Reaktors bildenden unteren Teil realisiert wird.

4. Verfahren nach Anspruch 1 oder 2, bei dem die erste flüssige Phase und die zweite flüssige Phase auf gleicher Höhe des Generators in diesen eingespritzt werden, während die dritte flüssige Phase auf einer Höhe in den Reaktor eingespritzt wird, die größer als diejenige der ersten flüssigen Phase und der zweiten flüssigen Phase ist, wobei die Einspritzung der ersten flüssigen Phase, der zweiten flüssigen Phase und der dritten flüssigen Phase in einem eine Einspritzzone des Reaktors bildenden oberen Teil realisiert wird.

5. Verfahren nach einem der vorhergehenden Ansprüche, bei dem die dritte flüssige Phase in den Reaktor mit einem Zufuhrdurchsatz eingespritzt wird, der höher als derjenige der ersten flüssigen Phase und/oder der zweiten flüssigen Phase ist.

6. Verfahren nach einem der vorhergehenden Ansprüche, die außerdem, nach dem Schritt b), einen Sedimentierungsschritt der aus dem Schritt b) stammenden Mischung umfasst.

7. Verfahren nach Anspruch 6, außerdem, nach dem Sedimentierungsschritt, einen Schritt zum Sammeln des Niederschlags umfassend, der sich gebildet hat.

8. Verfahren nach einem der vorhergehenden Ansprüche, das außerdem einen Recyclingschritt der dritten flüssigen Phase umfasst.

9. Verfahren nach Anspruch 3, angewendet bei einem Wirbelschichtreaktor mit vertikaler Hauptachse, umfassend :
- einen unteren Teil, bestimmt zur Einspritzung der ersten flüssigen Phase, der zweiten flüssigen Phase und der dritten flüssigen Phase ;
- einen mittleren Teil, bestimmt zur Fluidisierung der aus der ersten flüssigen Phase und der zweiten flüssigen Phase stammenden Mischung durch die dritte flüssige Phase ; und
- einen oberen Teil, bestimmt zur Sedimentierung des sich bildenden Niederschlags.

10. Verfahren nach Anspruch 4, angewendet bei einem Wirbelschichtreaktor mit vertikaler Hauptachse, umfassend :
- einen oberen Teil, bestimmt zur Einspritzung der ersten flüssigen Phase, der zweiten flüssigen Phase und der dritten flüssigen Phase ;
- einen mittleren Teil, bestimmt zur Fluidisierung der aus der ersten flüssigen Phase und der zweiten flüssigen Phase stammenden Mischung durch die dritte flüssige Phase ; und
- einen unteren Teil, bestimmt zur Sedimentierung des sich bildenden Niederschlags.

11. Verfahren nach einem der vorhergehenden Ansprüche, bei dem der gelöste Stoff ein Element der Actiniumreihe ist.

12. Verfahren nach Anspruch 11, das ein Verfahren zur oxalischen Ausfällung von wenigstens einem Element der Actiniumreihe ist.

13. Verfahren nach Anspruch 11 oder 12, bei dem :
- die erste flüssige Phase eine wässrige Lösung ist, die als gelösten Stoff wenigstens ein Element der Actiniumreihe enthält,
- die zweite flüssige Phase ein gelöster Stoff ist, der ein Ausfällreagenz des oder der Elemente der Actiniumreihe ist, die in der ersten flüssigen Phase vorhanden sind, wobei dieses Ausfällreagenz die Oxalsäure ist; und
- die dritte flüssige Phase eine organische Lösung ist, die ein organisches Lösungsmittel enthält, das nicht mischbar ist mit der ersten flüssigen Phase und der zweiten flüssigen Phase.

14. Verfahren nach Anspruch 13, bei dem das organische Lösungsmittel ein Dodekan oder wasserstoffhaltiges Tetrapropylen ist.

## Claims

1. Method for precipitating at least one solute in a reactor comprising:
a) a step in which a first liquid phase comprising the solute and a second liquid phase comprising a solute precipitation reagent are brought into contact in co-current in a reactor, as a result of which a mix is obtained comprising precipitate particles in suspension, and a third liquid phase forming a dispersing phase for said mix; and
b) a step in which the mix mentioned in step a) is fluidised by the third phase.

2. Method according to claim 1, in which the first liquid phase and the second liquid phase are miscible with each other, while the third liquid phase is immiscible with the mix comprising the first liquid phase and the second liquid phase.

3. Method according to claim 1 or 2 in which the first liquid phase and the second liquid phase are injected into the reactor at the same height, while the third phase is injected into the reactor below the height of the first liquid phase and the second liquid phase, injection of the first liquid phase, the second liquid phase and the third liquid phase being done in a lower part of the reactor forming an injection zone.

4. Method according to claim 1 or 2, in which the first liquid phase and the second liquid phase are injected into the reactor at the same height, while the third liquid phase is injected into the reactor above the height of the first liquid phase and the second liquid phase, injection of the first liquid phase, the second liquid phase and the third liquid phase being done in an upper part of the reactor forming an injection zone.

5. Method according to any one of the previous claims, in which the third liquid phase is injected into the reactor at a supply flow greater than the supply flow of the first liquid phase and/or the second liquid phase.

6. Method according to any one of the previous claims, also comprising a sedimentation step of the mix originating from step b), after step b).

7. Method according to claim 6, also comprising a step to collect the formed precipitate, after the sedimentation step.

8. Method according to any one of the previous claims, also comprising a recycling step of the third liquid phase.

9. Method according to claim 3, used in a fluidised bed reactor with a vertical principal axis comprising:
- a lower part used for injection of the first liquid phase, the second liquid phase and the third liquid phase;
- an intermediate part used for fluidisation of the mix resulting from the first liquid phase and the second liquid phase by the third liquid phase; and
- an upper part used for sedimentation of the precipitate formed.

10. Method according to claim 4, used in a fluidised bed reactor with a vertical principal axis comprising:
- an upper part used for injection of the first liquid phase, the second liquid phase and the third liquid phase;
- an intermediate part used for fluidisation of the mix resulting from the first liquid phase and the second liquid phase by the third liquid phase; and
- a lower part used for sedimentation of the precipitate formed.

11. Method according to any one of the previous claims, in which the solute is an actinide element.

12. Method according to claim 11, that is a method for oxalic precipitation of at least one actinide element.

13. Method according to claim 11 or 12, in which:
- the first liquid phase is an aqueous solution, comprising at least one actinide element as solute;
- the second liquid phase is an aqueous solution containing a precipitation reagent of the actinide element(s) present in the first liquid phase, this precipitation reagent being oxalic acid; and
- the third liquid phase is an organic solution comprising an organic solvent immiscible with the first liquid phase and the second liquid phase.

14. Method according to claim 13, in which the organic solvent is dodecane or hydrogenated tetrapropylene.
